# EUROPEAN PATENT SPECIFICATION

(11) **EP 4 089 538 B1**
(45) Date of publication and mention of the grant of the patent: **19.11.2025**
(21) Application number: 22172403.2
(22) Date of filing: 09.05.2022
(51) Int. Cl.: G06F 11/07, G06F 11/36, G06F 11/30

(54) **SYSTEM AND METHOD FOR IMPROVED CONTROL FLOW MONITORING OF PROCESSORS**
SYSTEM UND VERFAHREN ZUR VERBESSERTEN KONTROLLFLUSSÜBERWACHUNG VON PROZESSOREN
SYSTÈME ET PROCÉDÉ DE SURVEILLANCE AMÉLIORÉE DE FLUX DE COMMANDE DE PROCESSEURS

(30) Priority: 12.05.2021 RO 202100248
(43) Date of publication of application: 16.11.2022
(73) Proprietor: NXP USA, Inc., Austin TX 78735 (US)
(72) Inventor: Almajan, Iani Bogdan, 5656AG Eindhoven (NL)
(74) Representative: Miles, John Richard

(56) References cited:
- US-A- 5 974 529
- US-A1- 2008 120 492
- SHEN J P ET AL: "A roving monitoring processor for detection of control flow errors in multiple processor systems", MICROPROCESSING AND MICROPROGRAMMING, ELSEVIER SCIENCE PUBLISHERS, BV., AMSTERDAM, NL, vol. 20, no. 4-5, 1 May 1987 (1987-05-01), pages 249 - 269, XP024232259, ISSN: 0165-6074, [retrieved on 19870501], DOI: 10.1016/0165-6074(87)90215-8

## Description

### Background

### Field

This disclosure relates generally to control flow monitoring of software executed by a processor, and more specifically, to providing a hardware monitoring entity that is closely associated with the monitored processor thereby resulting in a smaller failure detection period than software-only solutions.

### Related Art

Software executing on information handling systems plays a role in many aspects of life, thus ensuring software quality has become an essential practice. Analysis of failures in a software system involves tracking the underlying causes and sources of those errors. Detecting runtime errors, especially in embedded systems, is important to assure system resilience. Such detection helps to avoid costs of failure and enables systems to perform corrective action prior to occurrence of a failure.

Control flow errors in software systems are significant impairments of system performance and reliability during component interaction. Software faults with respect to operating systems and hardware faults with respect to computational devices are among the causes of control flow errors in software systems. For example, low supply voltage and high frequency can leave some microprocessors susceptible to transient hardware errors and control flow errors in software systems executing on those microprocessors. Control-flow error-detection techniques traditionally use signature-based approaches to monitor the control transitions among code instructions, system components, or basic blocks and detect their anomalies. These techniques can detect errors by the use of watchdog, redundancy, or assertion approaches. These approaches can vary by a tradeoff between avoiding performance overhead, avoiding program modifications, and increasing error coverage by detecting more errors of different types or among different scopes of control transitions.

US 5 974 529 A describes systems and methods for control flow error detection in reduced instruction set computers. US 2008/120492 describes a hardware flow control monitor. A monitoring processor for flow control errors is described by Shen et al in "A roving monitoring processor for detection of control flow errors in multiple processor systems", MICROPROCESING AND MICROPROGRAMMING, ELSEVIER SCIENCE PUBLISHERS, BV., AMSTERDAM, NL, pages 249-269, ISSN: 0165-6074.

### Brief Description of the Drawings

Embodiments of the present invention may be better understood by referencing the accompanying drawings.
Figure 1 is a simplified block diagram illustrating an example of a multi-core applications processor incorporating hardware that can be used to implement the system and method of the control flow monitoring system.
Figure 2 is a simplified block diagram illustrating an example relationship between an accelerator processor and a monitoring entity, in accord with embodiments of the present invention.
Figure 3 is a simplified block diagram illustrating an example of instructions modified for embodiments of the present invention.
Figure 4 is a simplified flow diagram illustrating an example process that a monitoring entity can execute to monitor change of flow operations in accord with embodiments of the present invention.

The use of the same reference symbols in different drawings indicates identical items unless otherwise noted. The figures are not necessarily drawn to scale.

### Detailed Description

Embodiments of the present invention provide a mechanism to monitor control flow failure of processors having a simple processing pipeline (e.g., RISC5) or accelerators (e.g., digital signal processors). Embodiments have monitoring entity hardware attached to the processor that does not interfere with the normal functionality of the accelerator. By virtue of being closely associated with the processor, the failure detection period can be smaller than that of a typical host watchdog and can be defined as per the needs of the application. In some embodiments, the failure detection period is defined by the number of clock cycles needed for the largest basic block in the executed code.

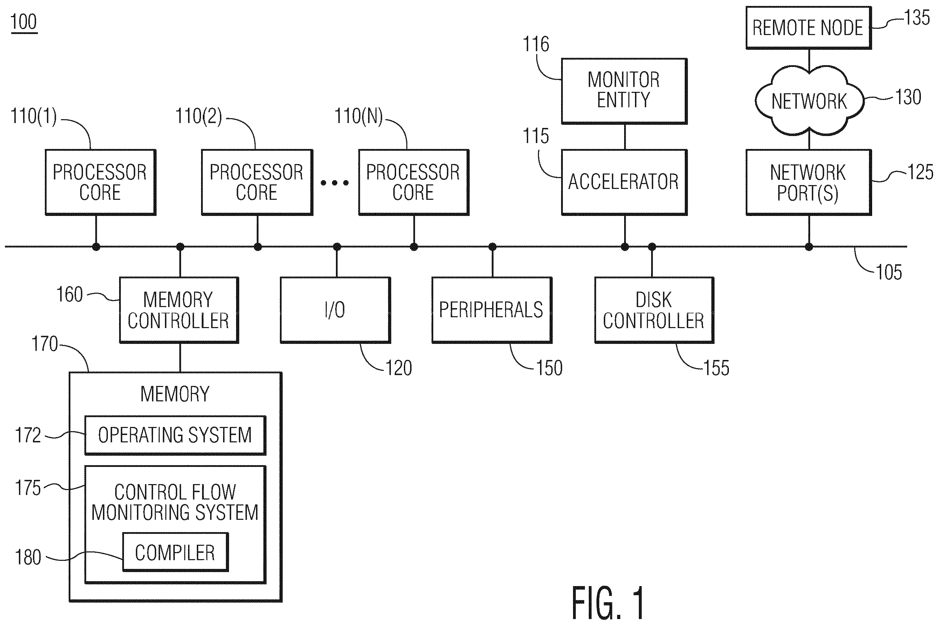

Figure 1 is a simplified block diagram illustrating an example of a multi-core applications processor 100 incorporating hardware that can be used to implement the system and method of the control flow monitoring system. A system interconnect 105 communicatively couples all illustrated components of the multi-core applications processor. A set of processor cores 110(1)-(N) are coupled to system interconnect 105. Each processor core includes at least one CPU and local cache memory. Further coupled to the system interconnect are input/output devices 120, including video input/output devices and audio input/output devices, along with other necessary input/output devices for an application, such as display, keyboard, mouse, and other associated controllers. The applications processor also includes a network port 125 operable to connect to a network 130, which is likewise accessible to one or more remote servers 135. The remote servers can provide data or functional services to portions of the present system.

An accelerator 115 is communicatively coupled to processor cores 110. Accelerator 115 is a processor having a simple processing pipeline or a digital signal processor dedicated to performing certain tasks associated with an application executing on one or more of processor cores 110(1)-(N). Through the system interconnect, any of the processor cores can provide instructions to the accelerator.

In addition, a monitoring entity module 116 is coupled to accelerator 115. As will be discussed more fully below, the monitoring entity monitors instructions executed by the accelerator and determines whether the control flow is correctly executed by the accelerator. Monitoring entity 116 also incorporates a cache memory that stores a temporary output of the accelerator execution. Upon validation by monitoring entity module 116, the contents of that cache memory can be written to other memories accessible by accelerator 115. If the code block is not validated, then the contents of the cache memory are scrapped and not written to other memory. The monitoring entity can be embodied by an application specific integrated circuit, a programmed FPGA, and the like.

In addition to the accelerator, other peripherals or peripheral controllers 150 and disk storage or disk controllers 155 are communicatively coupled to system interconnect 105. Peripherals 150 can include, for example, circuitry to perform power management, flash management, interconnect management, USB, and other PHY type tasks.

Applications processor 100 further includes a system memory 170, which is interconnected to the foregoing by system interconnect 105 via a memory controller 160. System memory 170 further comprises an operating system 172 and in various embodiments also comprises a control flow monitoring system 175. Control flow monitoring system 175 provides instructions to perform tasks described herein with regard to monitoring control flow in accelerator 115 and can incorporate a compiler 180 that provides modified instructions associated with change of flow used by monitor entity 116.

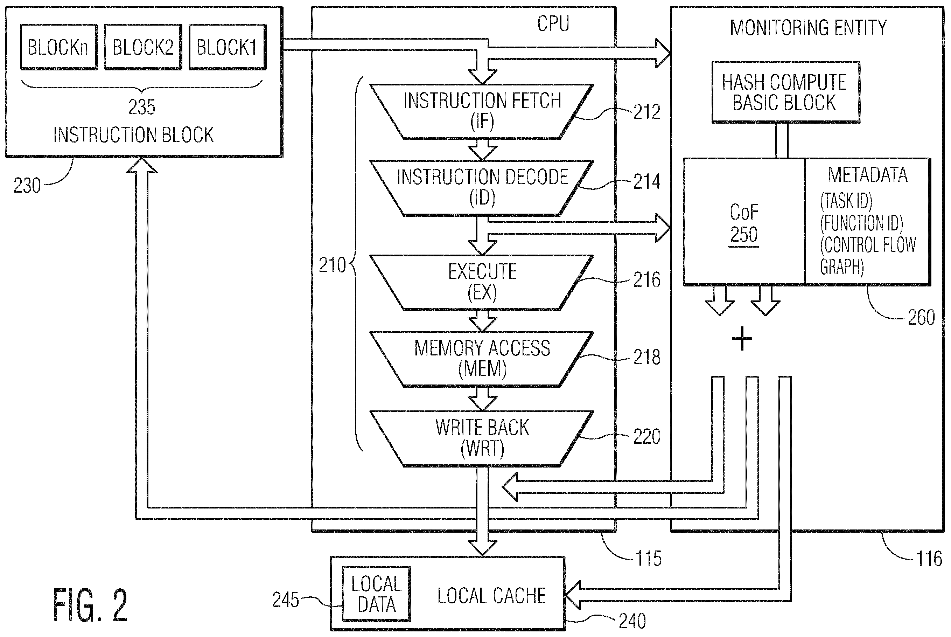

Figure 2 is a simplified block diagram illustrating an example relationship between an accelerator processor 115 and a monitoring entity 116, in accord with embodiments of the present invention. It should be noted that while example embodiments are discussed with regard to an accelerator processor, a monitoring entity can be coupled with any processor having a simple processing pipeline with clearly stated pipeline execution stages (e.g., a pipeline that does not permit out of order instructions or speculative execution). Accelerator processor 115 is illustrated with such a simple processing pipeline 210 that includes example processing stages such as instruction fetch 212, instruction decode 214, execute 216, memory access 218, and write back 220. Instructions are provided to the accelerator processor from an instruction block memory 230 that stores machine code instructions for the processor to execute in a set of instruction blocks 235. Instruction block memory 230 can take the form of an instruction cache, a tightly coupled memory, and the like. Instruction blocks 235 are basic blocks generated by compiler 180 that are straight-line code sequences with no branches in except to the entry and no branches out except at the exit. These basic blocks can form nodes in a control flow graph representing the software system associated with the instruction blocks. Vertices of the control flow graph can be represented by change of flow instructions connecting various blocks.

Monitoring entity 116 is coupled to accelerator processor 115 to monitor instruction blocks executed by the accelerator processor and determines whether the control flow of the software system is correctly executed. As will be discussed more fully below, the code executed by the blocks does not contain any information about change of flow, thus the control flow graph is computed off-line (e.g., by the compiler) and then the change of flow information is added into the executed code to validate integrity of the control flow. Monitoring entity 116 also deploys watchdogs to detect loss of integrity errors in the accelerator processor.

The monitoring entity performs its tasks by sniffing variables at different stages of the accelerator processor pipeline. The monitoring entity can take the form of an application specific integrated circuit, for example, that is designed to perform the tasks related to monitoring. Embodiments are placed physically close to the accelerator processor in order to allow for a quick response to changes of state of the accelerator processor (e.g., embodiments of the monitoring entity can respond on a block-by-block basis to control flow errors.

As illustrated, embodiments also include a local cache memory 240 that stores local data 245. Monitoring entity 116 stores a temporary output of the execution of accelerator processor 115. If the basic block execution by the accelerator processor is verified by the monitoring entity, then the contents of local cache 240 can be written to appropriate locations in the system main memory (e.g., memory 170) or an L1/L2 cache associated with a calling processor 110. But if the basic block execution is not verified by the monitoring entity, then the contents of local cache 240 are deleted and will not be written to main memory or another cache.

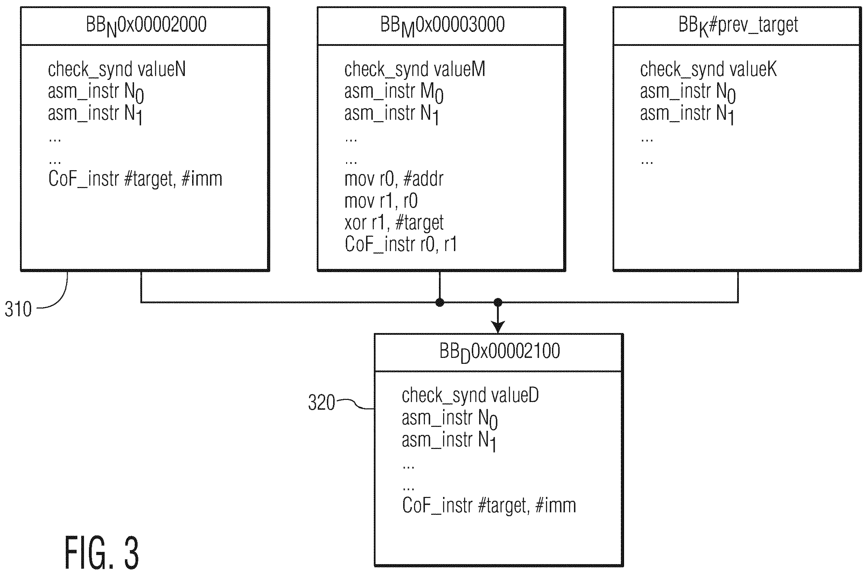

Figure 3 is a simplified block diagram illustrating an example of instructions modified for embodiments of the present invention. In order to provide the flow control monitoring functionality of monitoring entity 116, some modifications to the instruction set architecture (ISA) are needed. Block 310 provides instruction CoF_instr that is modified to include a signature. Thus, this instruction is changed from CoF_instr [address|regs] to CoF_instr [address|regs],[signature]. Block 310 illustrates this modification as CoF_instr #target, #imm, where #imm is the signature variable.

One control flow verification performed by monitoring entity 116 is to determine whether a jump from a source block to a destination block has sent the processor to a correct block address. Jumping to a correct block address is detected by adding the signature at the end of the source block, per the CoF_instr command above, and then detecting a syndrome value inserted at the start of the destination block. The signature, the intended jump address, and the syndrome form a triplet (e.g., [sign, dest, synd]) that should be unique. A function is applied to this triplet and, if the three values of the triplet are correct, the value of the function should be zero (e.g., F(sign, dest, synd)=0). Thus, if the function value is zero, then there is a correct change of flow. And if the function value is not zero, then there is an incorrect change of flow.

In order to provide the syndrome at the beginning of a block, a new ISA command is created - check_synd [bb_synd], where bb_synd is the syndrome value. The syndrome value and the signature value are chosen, or calculated by the compiler, to result in a function value of zero when used in conjunction with the address of the destination block. Block 320 of Figure 3 illustrates the inclusion of this new command, where the syndrome value is "valueD." The execution of this function can be performed by CoF module 250 in monitoring entity 116 of Figure 2 at any appropriate stage of pipeline 210.

It should be noted that in order to accommodate the above ISA instruction modifications and additions, compiler 180 is also modified. Embodiments of the compiler compute offline the signatures and syndromes that will be used when checking the integrity of the control flow.

Another change of flow failure mode associated with a wrong interpretation or execution of the change of flow instruction is loss of integrity. That is, when accelerator processor 115 attempts to execute the change of flow instruction, but does not reach the next instruction (e.g., the check_synd). Loss of integrity can be detected by monitoring entity 116 through use of a high-resolution watchdog. The number of CPU cycles for the high-resolution watchdog would be not too small, but close to the time needed by the processor to execute the change of flow instruction (e.g., 3 to 5 CPU cycles). The high-resolution watchdog is started when reaching the end of a basic block and can be disabled by the start of the targeted basic block. Again, such a watchdog can be executed and monitored by CoF module 250 of monitoring entity 116.

Monitoring entity 116 can also be configured to detect when accelerator processor 115 is stuck while executing a basic block. In some instances, the accelerator processor can become stuck and stop processing instructions. Basic blocks are limited in the number of instructions executed (e.g., basic block size can range from six instructions per block up to about 25 instructions). This range suggests that to detect whether a processor is stuck executing a basic block, a medium resolution watchdog can be kicked when a basic block starts execution. The number of CPU cycles associated with the medium resolution watchdog can be set in light of the application, and the size of the basic blocks, being executed. Again, this watchdog can be executed and monitored by CoF module 250 of monitoring entity 116. Configuration information associated with this watchdog is provided by metadata memory 260 and can be stored in association with a control flow graph therein.

In addition, the monitoring entity can be configured to detect whether an instruction has been skipped or duplicated in execution by the accelerator processor. This can occur, for example, when a transient failure causes an instruction to be executed twice or not at all. To detect this, an embodiment of monitoring entity 116 can generate a cyclic redundancy check (CRC) value for the executed instructions. At the end of the basic block, the generated CRC is matched against a provided value. If the values match, then there is no failure. If the values do not match, then that is an indication of a failure and the monitoring entity should react.

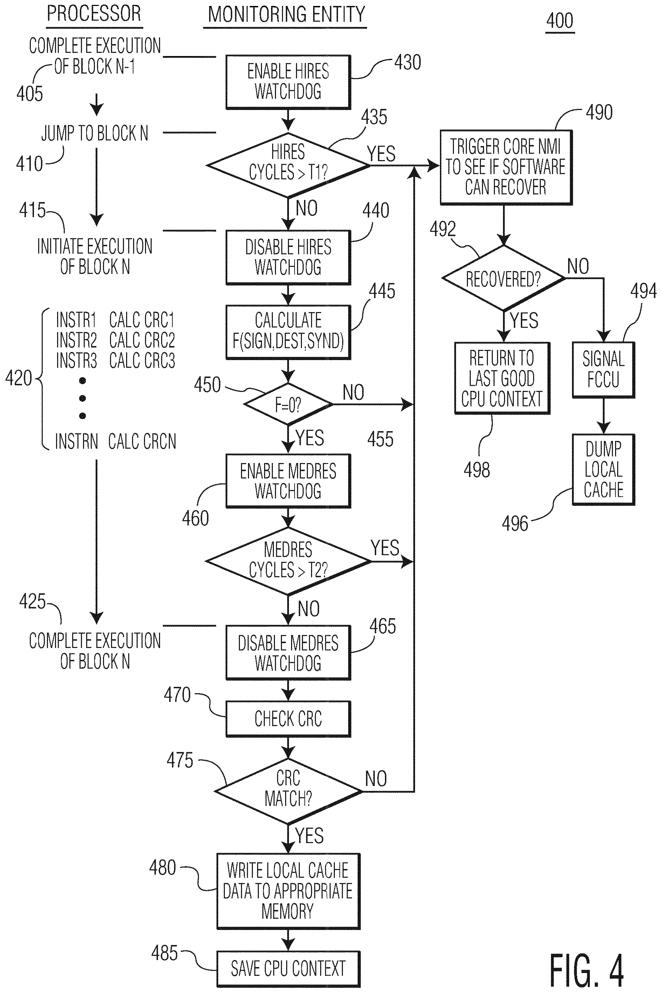

Figure 4 is a simplified flow diagram illustrating an example process 400 that a monitoring entity can execute to monitor change of flow operations in a processor (e.g., accelerator processor 115). The flow diagram illustrates when the monitoring entity performs certain operations in comparison with when the accelerator processor performs certain functions in its process flow.

When the processor completes the execution of a basic block N-1 (405), the monitoring entity enables a high-resolution watchdog (430). As discussed above, the high-resolution watchdog is used to determine whether the process, as processing flow transitions from block N-1 to block N (410), successfully makes the transition. The number of clock cycles are tracked by the monitoring entity as the processor transitions between blocks, and if the number of clock cycles is greater than a first threshold (435), the monitoring entity determines that an error has occurred, and a determination is made as to whether the processor can recover.

In one embodiment, monitoring entity 116 is configured to react to the trigger of the high-resolution, or other, watchdogs by attempting recovery through triggering a non-maskable interrupt (NMI) to accelerator processor 115 to see if the software can recover (490). In one embodiment, a low-resolution watchdog is started to monitor progress of the application during recovery. If the system recovers (492), then the monitoring system is informed by the watchdog and the system can return to the last good context of the processor (498) and resume operations from that point. If the system cannot recover (e.g., the application does not reset the low-resolution watchdog), then the monitoring entity can signal information externally (e.g., to a fault collection and control unit associated with the calling processor core) so that the application can take steps to recover from the error. In light of such an error, the data stored in the local cache will be incorrect and the local cache will therefore be cleared (496).

If the number of clock cycles remains below the first threshold (435) until the processor initiates execution of block N (415) (e.g., the process successfully makes the transition to a subsequent block), then the monitoring entity can disable the high-resolution watchdog (440). When block N begins execution, the check syndrome function is calculated (445) and the monitoring entity determines whether the function generates the expected value (e.g., 0) (450). If the function does not generate the expected value, then a recovery process can be executed (e.g., starting at step 490), as discussed above.

If the check syndrome function does generate the expected value, then a medium resolution watchdog can be enabled to track whether the block completes execution within an expected number of clock cycles (455). If the number of cycles measured by the medium-resolution watchdog exceeds a second threshold (460), as discussed above, this is indicative of the processor having become stuck within the block and a recovery being necessitated. Thus, if the number of cycles exceeds the second threshold for the medium-resolution watchdog, the monitoring entity enters a recovery process (e.g., starting at step 490).

If the medium-resolution watchdog does not exceed the second threshold by the time execution of block N is completed (425) (e.g., the block is successfully executed), then the medium-resolution watchdog is disabled (465). While the processor is executing instructions in the program (420), the processor can calculate a cyclic redundancy check (CRC) for each instruction. Upon completion of the set of instructions, the monitoring entity can check the CRC for all the instructions (e.g., summing the CRCs) (470) and then determine whether that CRC check matches an expected value (475). If there is not a match, then the recovery process can be executed (e.g., starting at step 490).

If the CRC matches (475), then the basic block has completed without a fault, and the local cache data can be written to an appropriate memory (480) and the CPU context from block N can be saved (485). The processor can then proceed to a next basic block for the program execution.

Embodiments of the present invention, as described herein, provide a mechanism for determining whether a processor performs correct change of flow operations during execution of a software system. A monitoring entity is provided that is closely coupled to a processor (e.g., an accelerator or a simple pipeline processor) to track events in the processor due to execution of the software system. The monitoring entity can react to a detected fault in the software system and provide a way for the processor to recover from the fault.

By now it should be appreciated that there has been provided a system for monitoring change of flow of a software process. The system includes a processor configured to execute a sequence of blocks of code that include the software process; a local memory, coupled to the processor, and configured to store one or more variable values associated with execution of a current block by the processor; and a monitoring entity coupled to the processor and the memory. During a flow transition, by the processor, from a first block, the monitoring entity is configured to determine whether the processor successfully transitions to a next block from the first block, and to determine, in response to the successful transition, whether the next block is a correct second block. During processing of the second block by the processor, the monitoring entity is configured to determine whether the processor successfully completes processing of the second block, and to store the one or more variable values associated with execution of the second block in a memory coupled to the processor when the processor successfully completes processing of the second block.

In one aspect of the above embodiment, the monitoring entity is configured to determine whether the processor successfully transitions or arrives at the next block from the first block by being further configured to enable a first watchdog process when the processor completes processing of the first block, monitor a number of clock cycles performed by the first watchdog process, determine that the processor arrived at the next block from the first block when the processor initiates execution of the next block prior to the number of clock cycles performed by the first watchdog process exceeding a first predetermined threshold, and determine that the processor did not arrive at the next block from the first block when the processor fails to initiate execution of the next block prior to the number of clock cycles performed by the first watchdog process exceeding the first predetermined threshold. The monitoring entity is configured to determine whether the next block is the correct second block by being further configured to calculate a function having inputs including a signature value, a syndrome value, and an address associated with the next block, and to determine that the next block is the correct second block when the function value matches a predetermined value. A compiler, during compilation of the software process, generates the signature value which is associated with the first block and generates the syndrome value which is associated with the next block. The monitoring entity is configured to determine whether the processor successfully completes processing of the second block by being further configured to enable a second watchdog process when the processor initiates processing of the second block, monitor a number of clock cycles performed by the second watchdog process, determined that the processor successfully completes processing of the second block when the processor arrives at the end of the second block prior to the numbers clock cycles performed by the second watchdog process exceeding a second predetermined threshold, and determine that the processor did not successfully complete processing of the second block when the processor fails to arrive at the end of the second block prior to the number of clock cycles performed by the second watchdog process exceeding the second predetermined threshold. The monitoring entity is configured to determine whether the processor successfully completes processing of the second block by being further configured to generate a cyclic redundancy check value for the second block, compare the cyclic redundancy check value with a predetermined value for the second block, and determine that the processor successfully completed processing of the second block when the cyclic redundancy check value matches the predetermined value for the second block. The cyclic redundancy check value is a sum of intermediate cyclic redundancy check values. Each instruction included in the second block corresponds to an intermediate cyclic redundancy check value of the intermediate cyclic redundancy check values.

In another aspect of the above embodiment, the monitoring entity is further configured to cause the processor to attempt to recover from incorrect change of flow of the software process when one of determining that the processor did not successfully transition or arrive at the next block from the first block, determining that the processor did not arrive at a correct second block, or determining that the processor failed to successfully complete processing of the second block occurs. In a further aspect, the monitoring entity is configured to cause the processor to attempt to recover by being further configured to send an interrupt to the processor where the interrupt causes the processor to re-execute the second block, start a third watchdog process, monitor a number of clock cycles performed by the third watchdog process, determine that the processor successfully completes processing of the second block when the processor arrives at the end of the second block prior to the number of clock cycles performed by the third watchdog process exceeding a third predetermined threshold, and determine that the processor did not successfully complete processing of the second block when the processor fails to arrive at the end of the second block prior to the number of clock cycles performed by the second watchdog process exceeding the third predetermined threshold. In yet a further aspect, the monitoring entity is further configured to provide a signal to an external fault control unit that the software process has failed when the processor did not successfully complete processing of the second block, and clear the local memory of the one or more variable values associated with execution of the second block.

Another embodiment provides a method for monitoring change of flow of a software process. The method includes: executing, by a processor, a sequence of blocks of code that include the software process; storing, in a first memory, one or more variable values associated with executing a current block of the sequence of blocks of code; during a flow transition, by the processor, from a first block of the blocks of code, determining, by a monitoring entity coupled to the processor, whether the processor arrived at a next block from the first block, and determining, by the monitoring entity, in response to the processor arriving at the next block, whether the next block is a correct second block; and during processing of the second block by the processor, determining, by the monitoring entity, whether the processor successfully completes processing of the second block, and storing the one or more variable values associated with execution of the second block in a second memory coupled to the processor in response to determining that the processor successfully completed processing of the second block. Determining whether the processor arrived at the next block from the first block includes: enabling, by the monitoring entity, a first watchdog process when the processor completes processing of the first block; monitoring, by the monitoring entity, a number of clock cycles performed by the first watchdog process; determining, by the monitoring entity, that the processor arrived at the next block from the first block when the processor initiates execution of the next block prior to the number of clock cycles performed by the first watchdog process exceeding a first predetermined threshold; and, determining by the monitoring entity that the processor failed to arrive at the next block from the first block when the processor fails to initiate execution of the next block prior to the number of clock cycles performed by the first watchdog process exceeding the first predetermined threshold. Determining whether the next block is the correct second block includes calculating, by the monitoring entity, a function having inputs that include a signature value, a syndrome value, and an address associated with the next block, and determining, by the monitoring entity, that the next block is the correct second block when the function value matches a predetermined value. A compiler, during compilation of the software process, generates the signature value which is associated with the first block and generates the syndrome value which is associated with the next block.

In another aspect of the above embodiment, determining by the monitoring entity whether the processor successfully completes processing of the second block includes enabling a second watchdog process when the processor initiates processing of the second block, monitoring a number of clock cycles performed by the second watchdog process, determining that the processor successfully completes processing of the second block when the processor arrives at the end of the second block prior to the number of clock cycles performed by the second watchdog process exceeding a second predetermined threshold, and determining that the processor did not successfully complete processing of the second block when the processor fails to arrive at the end of the second block prior to the number of clock cycles performed by the second watchdog process exceeding the second predetermined threshold. In a further aspect, determining by the monitoring entity whether the processor successfully completes processing of the second block further includes generating a cyclic redundancy check (CRC) value for the second block, comparing the CRC value with a predetermined value for the second block, and determining that the processor successfully completed processing of the second block when the CRC value matches the predetermined value for the second block. The CRC value is a sum of intermediate CRC values. Each instruction included in the second block corresponds to an intermediate CRC value of the intermediate CRC values.

In another aspect of the above embodiment, the method further includes causing, by the monitoring entity, the processor to attempt to recover from an incorrect change of flow of the software process when one of said determining that the processor did not arrive the next block from the first block, said determining that the processor did not arrive at a correct second block, or said determining that the processor failed to successfully complete processing the second block occurs. In a further aspect, causing, by the monitoring entity, the processor to attempt to recover further includes sending an interrupt to the processor where the interrupt causes the processor to re-execute the second block, starting a third watchdog process, monitoring a number of clock cycles performed by the third watchdog process, determining that the processor successfully completes processing of the second block when the processor arrives at the end of the second block prior to the number of clock cycles performed by the third watchdog process exceeding a third predetermined threshold, and determining that the processor did not successfully complete processing of the second block when the processor fails to arrive at the end of the second block prior to the number of clock cycles performed by the second watchdog process exceeding the third predetermined threshold. In yet a further aspect, the method further includes providing a signal, by the monitoring entity, to an external file control unit that the software process has failed when the processor did not successfully complete processing of the second block, and clearing the local memory of the one or more variable values associated with execution second block.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

The term "program," as used herein, is defined as a sequence of instructions designed for execution on a computer system. A program, or computer program, may include a subroutine, a function, a procedure, an object method, an object implementation, an executable application, an applet, a servlet, a source code, an object code, a shared library/dynamic load library and/or other sequence of instructions designed for execution on a computer system.

Some of the above embodiments, as applicable, may be implemented using a variety of different information processing systems. For example, although Figure 1 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Also for example, in one embodiment, the illustrated elements of system 100 are circuitry located on a single integrated circuit or within a same device. Alternatively, system 100 may include any number of separate integrated circuits or separate devices interconnected with each other. For example, memory 170 may be located on a same integrated circuit as processor cores 110(1)-(N) or on a separate integrated circuit or located within another peripheral or slave discretely separate from other elements of system 100. Peripherals 150 and I/O circuitry 120 may also be located on separate integrated circuits or devices. Also for example, system 100 or portions thereof may be soft or code representations of physical circuitry or of logical representations convertible into physical circuitry. As such, system 100 may be embodied in a hardware description language of any appropriate type.

A mechanism is provided to monitor control flow failure of processors having a simple processing pipeline (e.g., RISC5) or accelerators (e.g., digital signal processors). Embodiments have a monitoring entity attached to the processor that does not interfere with the normal functionality of the accelerator. By virtue of being closely associated with the processor, the failure detection period can be smaller than that of a typical host watchdog and can be defined as per the needs of the application. In some embodiments, the failure detection period is defined by the number of clock cycles needed for the largest basic block in the executed code.

Furthermore, those skilled in the art will recognize that boundaries between the functionality of the above-described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

All or some of the software described herein may be received elements of system 100, for example, from computer readable media such as memory 170 or other media on other computer systems. Such computer readable media may be permanently, removably or remotely coupled to an information processing system such as system 100. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

In one embodiment, system 100 is a computer system such as a personal computer system. Other embodiments may include different types of computer systems. Computer systems are information handling systems which can be designed to give independent computing power to one or more users. Computer systems may be found in many forms including but not limited to mainframes, minicomputers, servers, workstations, personal computers, notepads, personal digital assistants, electronic games, automotive and other embedded systems, cell phones and various other wireless devices. A typical computer system includes at least one processing unit, associated memory and a number of input/output (I/O) devices.

A computer system processes information according to a program and produces resultant output information via I/O devices. A program is a list of instructions such as a particular application program and/or an operating system. A computer program is typically stored internally on computer readable storage medium or transmitted to the computer system via a computer readable transmission medium. A computer process typically includes an executing (running) program or portion of a program, current program values and state information, and the resources used by the operating system to manage the execution of the process. A parent process may spawn other, child processes to help perform the overall functionality of the parent process. Because the parent process specifically spawns the child processes to perform a portion of the overall functionality of the parent process, the functions performed by child processes (and grandchild processes, etc.) may sometimes be described as being performed by the parent process.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A system (100) for monitoring change of flow of a software process, the system comprising:
a processor (110, 115) configured to execute a sequence of blocks of code (235, 310, 320) that comprise the software process;
a local memory (240), coupled to the processor, and configured to store one or more variable values (245) associated with execution of a current block by the processor; and
a monitoring entity (116), coupled to the processor (115) and the local memory (240), and configured to
during a flow transition, by the processor (115), from a first block (310),
determine whether the processor (115) arrived at a next block (320) from the first block (310), and
determine, in response to the processor (115) arriving at the next block, whether the next block is a correct second block, and
during processing of the second block by the processor (115),
determine whether the processor (115) successfully completes processing of the second block (320), and
store the one or more variable values associated with execution of the second block in a memory (170) coupled to the processor (115) when the processor successfully completes processing of the second block (320);
**characterized in that**
the monitoring entity (116) is configured to determine whether the processor (115) arrived at the next block (320) from the first block by (310) being further configured to
enable a first watchdog process when the processor (115) completes processing of the first block (310);
monitor a number of clock cycles performed by the first watchdog process;
determine that the processor arrived at the next block (320) from the first block (310) when the processor initiates execution of the next block (320) prior to the number of clock cycles performed by the first watchdog process exceeding a first predetermined threshold; and
determine that the processor (115) did not arrive at the next block (320) from the first block (310) when the processor (115) fails to initiate execution of the next block prior to the number of clock cycles performed by the first watchdog process exceeding the first predetermined threshold;
wherein the monitoring entity (116) is further configured to determine whether the next block (320) is the correct second block by being further configured to
calculate a function having inputs comprising a signature value, a syndrome value, and an address associated with the next block, wherein
a compiler, during compilation of the software process, generates the signature value which is associated with the first block, and
the compiler, during compilation of the software process, generates the syndrome value which is associated with the next block; and
determine that the next block is the correct second block when a value of the function matches a predetermined value;
wherein the monitoring entity (116) is further configured to determine whether the processor (115) successfully completes processing of the second block (320) by being further configured to
enable a second watchdog process when the processor initiates processing of the second block (320);
monitor a number of clock cycles performed by the second watchdog process;
determine that the processor (115) successfully completes processing of the second block (320) when the processor (115) arrives at the end of the second block prior to the number of clock cycles performed by the second watchdog process exceeding a second predetermined threshold; and
determine that the processor (115) did not successfully complete processing of the second block (320) when the processor (115) fails to arrive at the end of the second block prior to the number of clock cycles performed by the second watchdog process exceeding the second predetermined threshold; and
wherein the monitoring entity (116) is configured to determine whether the processor (115) successfully completes processing of the second block (320) by being further configured to :
generate a cyclic redundancy check value for the second block (320), wherein the cyclic redundancy check value is a sum of intermediate cyclic redundancy check values, and each instruction comprised in the second block (320) corresponds to an intermediate cyclic redundancy check value of the intermediate cyclic redundancy check values;
compare the cyclic redundancy check value with a predetermined value for the second block (320); and
determine that the processor (115) successfully completed processing of the second block (320) when the cyclic redundancy check value matches the predetermined value for the second block (320).

2. The system (100) of claim 1 wherein the monitoring entity (116) is further configured to cause the processor (115) to attempt to recover from an incorrect change of flow of the software process when one of said determining that the processor did not arrive at the next block from the first block, said determining that the processor did not arrive at a correct second block, or said determining that the processor successfully completed processing the second block occurs.

3. The system (100) of claim 2 wherein the monitoring entity(116) is configured to cause the processor (115) to attempt to recover by being further configured to:
send an interrupt to the processor (115), wherein the interrupt causes the processor(115) to re-execute the second block (320);
start a third watchdog process;
monitor a number of clock cycles performed by the third watchdog process;
determine that the processor (115) successfully completes processing of the second block (320) when the processor (115) arrives at the end of the second block (320) prior to the number of clock cycles performed by the third watchdog process exceeding a third predetermined threshold; and
determine that the processor (115) did not successfully complete processing of the second block (320) when the processor (115) fails to arrive at the end of the second block prior (320) to the number of clock cycles performed by the second watchdog process exceeding the third predetermined threshold.

4. The system of claim 3 wherein the monitoring entity (116) is further configured to
provide a signal to an external fault control unit that the software process has failed, when the processor (115) did not successfully complete processing of the second block (320) ; and
clear the local memory (240) of the one or more variable values associated with execution of the second block (320).

5. A method (400) for monitoring change of flow of a software process, the method comprising:
executing, by a processor (115) , a sequence of blocks of code (235, 310, 320) that comprise the software process;
storing, in a first memory (240), one or more variable values associated with said executing a current block of the sequence of blocks of code;
during a flow transition, by the processor (115), from a first block (310) of the blocks of code,
determining (445), by a monitoring entity (116) coupled to the processor, whether the processor arrived at a next block (320) from the first block (310), and
determining (450), by the monitoring entity (116), in response to the processor arriving at the next block, whether the next block is a correct second block; and
during processing of the second block by the processor,
determining, by the monitoring entity, whether the processor successfully completes processing of the second block, and
storing the one or more variable values associated with execution of the second block in a second memory coupled to the processor in response to said determining that the processor successfully completed processing of the second block;
**characterized in that**
said determining whether the processor arrived at the next block from the first block comprises:
enabling (430) , by the monitoring entity, a first watchdog process when the processor completes processing of the first block;
monitoring (435), by the monitoring entity, a number of clock cycles performed by the first watchdog process;
determining (440), by the monitoring entity, that the processor arrived at the next block from the first block when the processor initiates execution of the next block prior to the number of clock cycles performed by the first watchdog process exceeding a first predetermined threshold; and
determining (490) , by the monitoring entity, that the processor failed to arrive at the next block from the first block when the processor fails to initiate execution of the next block prior to the number of clock cycles performed by the first watchdog process exceeding the first predetermined threshold;
wherein said determining whether the next block is the correct second block comprises:
calculating (445), by the monitoring entity, a function having inputs comprising a signature value, a syndrome value, and an address associated with the next block, wherein a compiler, during compilation of the software process, generates the signature value which is associated with the first block, and
the compiler, during compilation of the software process, generates the syndrome value which is associated with the next block; and
determining (450), by the monitoring entity, that the next block is the correct second block when a value of the function matches a predetermined value;
wherein said determining, by the monitoring entity, whether the processor successfully completes processing of the second block comprises:
enabling a second watchdog process (460) when the processor initiates processing of the second block;
monitoring a number of clock cycles performed by the second watchdog process;
determining that the processor successfully completes processing of the second block when the processor arrives at the end of the second block prior to the number of clock cycles performed by the second watchdog process exceeding a second predetermined threshold; and
determining that the processor did not successfully complete processing of the second block when the processor fails to arrive at the end of the second block prior to the number of clock cycles performed by the second watchdog process exceeding the second predetermined threshold; and wherein determining, by the monitoring entity, whether the processor successfully completes processing of the second block further comprises:
generating (470) a cyclic redundancy check (CRC) value for the second block,
wherein the CRC value is a sum of intermediate CRC values, and
each instruction comprised in the second block corresponds to an intermediate CRC value of the intermediate CRC values;
comparing the CRC value with a predetermined value for the second block; and
determining that the processor successfully completed processing of the second block when the CRC value matches the predetermined value for the second block.

6. The method of claim 5 further comprising:
causing (490) , by the monitoring entity, the processor to attempt to recover from an incorrect change of flow of the software process when one of said determining that the processor did not arrive at the next block from the first block, said determining that the processor did not arrive at a correct second block, or said determining that the processor failed to successfully complete processing the second block occurs.

7. The method of claim 6 wherein causing, by the monitoring entity, the processor to attempt to recover further comprises:
sending an interrupt (490) to the processor (115), wherein the interrupt causes the processor to re-execute the second block;
starting a third watchdog process;
monitoring a number of clock cycles performed by the third watchdog process;
determining that the processor successfully completes processing of the second block when the processor arrives at the end of the second block prior to the number of clock cycles performed by the third watchdog process exceeding a third predetermined threshold; and
determining that the processor did not successfully complete processing of the second block when the processor fails to arrive at the end of the second block prior to the number of clock cycles performed by the second watchdog process exceeding the third predetermined threshold.

## Patentansprüche

1. System (100) zum Überwachen einer Flussänderung eines Softwareprozesses, wobei das System Folgendes umfasst:
einen Prozessor (110, 115), der dazu ausgelegt ist, eine Sequenz von Codeblöcken (235, 310, 320) auszuführen, die den Softwareprozess umfassen;
einen lokalen Speicher (240), der mit dem Prozessor gekoppelt ist und dazu ausgelegt ist, einen oder mehrere Variablenwerte (245) zu speichern, die mit der Ausführung eines aktuellen Blocks durch den Prozessor assoziiert sind; und
eine Überwachungsentität (116), die mit dem Prozessor (115) und dem lokalen Speicher (240) gekoppelt und zu Folgendem ausgelegt ist:
während eines Flussübergangs durch den Prozessor (115) von einem ersten Block (310),
Bestimmen, ob der Prozessor (115) an einem nächsten Block (320) von dem ersten Block (310) angekommen ist, und
Bestimmen, als Reaktion darauf, dass der Prozessor (115) bei dem nächsten Block eintrifft, ob der nächste Block ein korrekter zweiter Block ist, und
während der Verarbeitung des zweiten Blocks durch den Prozessor (115),
Bestimmen, ob der Prozessor (115) die Verarbeitung des zweiten Blocks (320) erfolgreich abgeschlossen hat, und
Speichern des einen oder der mehreren Variablenwerte, die mit der Ausführung des zweiten Blocks assoziiert sind, in einem Speicher (170), der mit dem Prozessor (115) gekoppelt ist, wenn der Prozessor die Verarbeitung des zweiten Blocks (320) erfolgreich abgeschlossen hat;
**dadurch gekennzeichnet, dass**
die Überwachungsentität (116) dazu ausgelegt ist, zu bestimmen, ob der Prozessor (115) an dem nächsten Block (320) von dem ersten Block angekommen ist, indem er (310) ferner für Folgendes ausgelegt ist:
Aktivieren eines ersten Watchdog-Prozesses, wenn der Prozessor (115) die Verarbeitung des ersten Blocks (310) abgeschlossen hat;
Überwachen einer Anzahl von Taktzyklen, die durch den ersten Watchdog-Prozess durchgeführt werden;
Bestimmen, dass der Prozessor am nächsten Block (320) von dem ersten Block (310) angekommen ist, wenn der Prozessor die Ausführung des nächsten Blocks (320) initiiert, bevor die Anzahl von Taktzyklen, die durch den ersten Watchdog-Prozess durchgeführt werden, eine erste vorbestimmte Schwelle überschreitet; und
Bestimmen, dass der Prozessor (115) nicht am nächsten Block (320) von dem ersten Block (310) angekommen ist, wenn der Prozessor (115) die Ausführung des nächsten Blocks nicht initiiert, bevor die Anzahl von Taktzyklen, die durch den ersten Watchdog-Prozess durchgeführt werden, die erste vorbestimmte Schwelle überschreitet;
wobei die Überwachungsentität (116) ferner dazu ausgelegt ist, zu bestimmen, ob der nächste Block (320) der korrekte zweite Block ist, indem sie ferner für Folgendes ausgelegt ist:
Berechnen einer Funktion mit Eingaben, die einen Signaturwert, einen Syndromwert und eine mit dem nächsten Block assoziierte Adresse umfassen, wobei ein Compiler während der Kompilierung des Softwareprozesses den Signaturwert erzeugt, der dem ersten Block zugeordnet ist, und
der Compiler während der Kompilierung des Softwareprozesses den Syndromwert erzeugt, der dem nächsten Block zugeordnet ist; und
Bestimmen, dass der nächste Block der korrekte zweite Block ist, wenn ein Wert der Funktion mit einem vorbestimmten Wert übereinstimmt;
wobei die Überwachungsentität (116) ferner dazu ausgelegt ist, zu bestimmen, ob der Prozessor (115) die Verarbeitung des zweiten Blocks (320) erfolgreich abgeschlossen hat, indem er ferner für Folgendes ausgelegt ist:
Aktivieren eines zweiten Watchdog-Prozesses, wenn der Prozessor eine Verarbeitung des zweiten Blocks initiiert (320);
Überwachen einer Anzahl von Taktzyklen, die durch den zweiten Watchdog-Prozess durchgeführt werden;
Bestimmen, dass der Prozessor (115) die Verarbeitung des zweiten Blocks (320) erfolgreich abgeschlossen hat, wenn der Prozessor (115) am Ende des zweiten Blocks ankommt, bevor die Anzahl von Taktzyklen, die durch den zweiten Watchdog-Prozess durchgeführt werden, eine zweite vorbestimmte Schwelle überschreitet; und
Bestimmen, dass der Prozessor (115) die Verarbeitung des zweiten Blocks (320) nicht erfolgreich abgeschlossen hat, wenn der Prozessor (115) nicht am Ende des zweiten Blocks ankommt, bevor die Anzahl von Taktzyklen, die durch den zweiten Watchdog-Prozess durchgeführt werden, die zweite vorbestimmte Schwelle überschreitet; und
wobei die Überwachungsentität (116) dazu ausgelegt ist, zu bestimmen, ob der Prozessor (115) die Verarbeitung des zweiten Blocks (320) erfolgreich abgeschlossen hat, indem er ferner für Folgendes ausgelegt ist:
Erzeugen eines zyklischen Redundanzprüfungswertes für den zweiten Block (320), wobei der zyklische Redundanzprüfungswert eine Summe von zwischen-zyklischen Redundanzprüfungswerten ist und jede Anweisung, die in dem zweiten Block (320) enthalten ist, einem zwischen-zyklischen Redundanzprüfungswert der zwischen-zyklischen Redundanzprüfungswerte entspricht;
Vergleichen des zyklischen Redundanzprüfungswertes mit einem vorbestimmten Wert für den zweiten Block (320); und Bestimmen, dass der Prozessor (115) die Verarbeitung des zweiten Blocks (320) erfolgreich abgeschlossen hat, wenn der zyklische Redundanzprüfungswert mit dem vorbestimmten Wert für den zweiten Block (320) übereinstimmt.

2. System (100) nach Anspruch 1, wobei die Überwachungsentität (116) ferner so ausgelegt ist, dass sie den Prozessor (115) veranlasst, zu versuchen, sich von einer inkorrekten Änderung des Ablaufs des Softwareprozesses zu erholen, wenn eines der folgenden Ereignisse eintritt: Bestimmen, dass der Prozessor nicht beim nächsten Block vom ersten Block angekommen ist, Bestimmen, dass der Prozessor nicht bei einem korrekten zweiten Block angekommen ist, oder Bestimmen, dass der Prozessor die Verarbeitung des zweiten Blocks erfolgreich abgeschlossen hat.

3. System (100) nach Anspruch 2, wobei die Überwachungsentität (116) veranlasst, dass der Prozessor (115) einen Wiederherstellungsversuch unternimmt, indem sie ferner für Folgendes ausgelegt ist:
Senden einer Unterbrechung an den Prozessor (115), wobei die Unterbrechung bewirkt, dass der Prozessor (115) den zweiten Block (320) erneut ausführt;
Starten eines dritten Watchdog-Prozesses;
Überwachen einer Anzahl von Taktzyklen, die durch den dritten Watchdog-Prozess durchgeführt werden;
Bestimmen, dass der Prozessor (115) die Verarbeitung des zweiten Blocks (320) erfolgreich abgeschlossen hat, wenn der Prozessor (115) am Ende des zweiten Blocks (320) ankommt, bevor die Anzahl von Taktzyklen, die durch den dritten Watchdog-Prozess durchgeführt werden, eine dritte vorbestimmte Schwelle überschreitet; und
Bestimmen, dass der Prozessor (115) die Verarbeitung des zweiten Blocks (320) nicht erfolgreich abgeschlossen hat, wenn der Prozessor (115) vor (320) der Anzahl von Taktzyklen, die durch den zweiten Watchdog-Prozess durchgeführt werden, die die dritte vorbestimmte Schwelle überschreitet, nicht am Ende des zweiten Blocks ankommt.

4. System nach Anspruch 3, wobei die Überwachungsentität (116) ferner dazu ausgelegt ist, einer externen Fehlersteuereinheit ein Signal bereitzustellen, dass der Softwareprozess fehlgeschlagen ist,
wenn der Prozessor (115) die Verarbeitung des zweiten Blocks (320) nicht erfolgreich abgeschlossen hat; und
Löschen des lokalen Speichers (240) des einen oder der mehreren Variablenwerte, die mit der Ausführung des zweiten Blocks (320) assoziiert sind.

5. Verfahren (400) zum Überwachen einer Flussänderung eines Softwareprozesses, wobei das Verfahren Folgendes umfasst:
Ausführen, durch einen Prozessor (115), einer Sequenz von Codeblöcken (235, 310, 320), die den Softwareprozess umfassen;
Speichern, in einem ersten Speicher (240), eines oder mehrerer Variablenwerte, die mit dem Ausführen eines aktuellen Blocks der Sequenz von Codeblöcken assoziiert sind;
während eines Flussübergangs durch den Prozessor (115) von einem ersten Block (310) der Codeblöcke,
Bestimmen (445), durch eine Überwachungsentität (116), die mit dem Prozessor gekoppelt ist, ob der Prozessor an einem nächsten Block (320) von dem ersten Block (310) angekommen ist, und
Bestimmen (450), durch die Überwachungsentität (116), als Reaktion darauf, dass der Prozessor bei dem nächsten Block ankommt, ob der nächste Block ein korrekter zweiter Block ist; und
während der Verarbeitung des zweiten Blocks durch den Prozessor,
Bestimmen, durch die Überwachungsentität, ob der Prozessor die Verarbeitung des zweiten Blocks erfolgreich abgeschlossen hat, und
Speichern des einen oder der mehreren Variablenwerte, die mit der Ausführung des zweiten Blocks assoziiert sind, in einem zweiten Speicher, der mit dem Prozessor gekoppelt ist, als Reaktion auf das Bestimmen, dass der Prozessor die Verarbeitung des zweiten Blocks erfolgreich abgeschlossen hat;
**dadurch gekennzeichnet, dass**
das Bestimmen, ob der Prozessor an dem nächsten Block von dem ersten Block angekommen ist, Folgendes umfasst:
Aktivieren (430), durch die Überwachungsentität, eines ersten Watchdog-Prozesses, wenn der Prozessor die Verarbeitung des ersten Blocks abschließt;
Überwachen (435), durch die Überwachungsentität, einer Anzahl von Taktzyklen, die durch den ersten Watchdog-Prozess durchgeführt werden;
Bestimmen (440), durch die Überwachungsentität, dass der Prozessor an dem nächsten Block von dem ersten Block angekommen ist, wenn der Prozessor die Ausführung des nächsten Blocks initiiert, bevor die Anzahl von Taktzyklen, die durch den ersten Watchdog-Prozess durchgeführt werden, eine erste vorbestimmte Schwelle überschreitet; und
Bestimmen (490), durch die Überwachungsentität, dass der Prozessor nicht an dem nächsten Block von dem ersten Block angekommen ist, wenn der Prozessor die Ausführung des nächsten Blocks nicht initiiert, bevor die Anzahl von Taktzyklen, die durch den ersten Watchdog-Prozess durchgeführt werden, die erste vorbestimmte Schwelle überschreitet;
wobei das Bestimmen, ob der nächste Block der korrekte zweite Block ist, Folgendes umfasst:
Berechnen (445), durch die Überwachungsentität, einer Funktion mit Eingaben, die einen Signaturwert, einen Syndromwert und eine mit dem nächsten Block assoziierte Adresse umfassen, wobei ein Compiler während der Kompilierung des Softwareprozesses den Signaturwert erzeugt, der mit dem ersten Block assoziiert ist, und
der Compiler während der Kompilierung des Softwareprozesses den Syndromwert erzeugt, der dem nächsten Block zugeordnet ist; und
Bestimmen (450), durch die Überwachungsentität, dass der nächste Block der korrekte zweite Block ist, wenn ein Wert der Funktion mit einem vorbestimmten Wert übereinstimmt;
wobei das Bestimmen, durch die Überwachungsentität, ob der Prozessor die Verarbeitung des zweiten Blocks erfolgreich abgeschlossen hat, Folgendes umfasst:
Aktivieren eines zweiten Watchdog-Prozesses (460), wenn der Prozessor eine Verarbeitung des zweiten Blocks initiiert;
Überwachen einer Anzahl von Taktzyklen, die durch den zweiten Watchdog-Prozess durchgeführt werden;
Bestimmen, dass der Prozessor die Verarbeitung des zweiten Blocks erfolgreich abgeschlossen hat, wenn der Prozessor am Ende des zweiten Blocks ankommt, bevor die Anzahl von Taktzyklen, die durch den zweiten Watchdog-Prozess durchgeführt werden, eine zweite vorbestimmte Schwelle überschreitet; und
Bestimmen, dass der Prozessor die Verarbeitung des zweiten Blocks nicht erfolgreich abgeschlossen hat, wenn der Prozessor nicht am Ende des zweiten Blocks ankommt, bevor die Anzahl von Taktzyklen, die durch den zweiten Watchdog-Prozess durchgeführt werden, die zweite vorbestimmte Schwelle überschreitet; und wobei das Bestimmen, durch die Überwachungsentität, ob der Prozessor die Verarbeitung des zweiten Blocks erfolgreich abgeschlossen hat, ferner Folgendes umfasst:
Erzeugen (470) eines CRC-Wertes (Cyclic Redundancy Check = zyklische Redundanzprüfung) für den zweiten Block, wobei der CRC-Wert eine Summe von Zwischen-CRC-Werten ist, und
jede in dem zweiten Block enthaltene Anweisung einem Zwischen-CRC-Wert der Zwischen-CRC-Werte entspricht;
Vergleichen des CRC-Wertes mit einem vorbestimmten Wert für den zweiten Block; und
Bestimmen, dass der Prozessor die Verarbeitung des zweiten Blocks erfolgreich abgeschlossen hat, wenn der CRC-Wert mit dem vorbestimmten Wert für den zweiten Block übereinstimmt.

6. Verfahren nach Anspruch 5, das ferner Folgendes umfasst:
Veranlassen (490) durch die Überwachungsentität, dass der Prozessor versucht, sich von einer falschen Änderung des Ablaufs des Softwareprozesses zu erholen, wenn eines der folgenden Ereignisse eintritt: Bestimmen, dass der Prozessor nicht vom ersten Block am nächsten Block angekommen ist, Bestimmen, dass der Prozessor nicht an einem korrekten zweiten Block angekommen ist, oder Bestimmen, dass der Prozessor die Verarbeitung des zweiten Blocks nicht erfolgreich abgeschlossen hat.

7. Verfahren nach Anspruch 6, wobei das Veranlassen des Prozessors durch die Überwachungsentität, einen Versuch zur Wiederherstellung zu unternehmen, ferner Folgendes umfasst:
Senden eines Interrupts (490) an den Prozessor (115),
wobei
der Interrupt den Prozessor veranlasst, den zweiten Block erneut auszuführen;
Starten eines dritten Watchdog-Prozesses;
Überwachen einer Anzahl von Taktzyklen, die durch den dritten Watchdog-Prozess durchgeführt werden;
Bestimmen, dass der Prozessor die Verarbeitung des zweiten Blocks erfolgreich abgeschlossen hat, wenn der Prozessor am Ende des zweiten Blocks ankommt, bevor die Anzahl von Taktzyklen, die durch den dritten Watchdog-Prozess durchgeführt werden, eine dritte vorbestimmte Schwelle überschreitet; und
Bestimmen, dass der Prozessor die Verarbeitung des zweiten Blocks nicht erfolgreich abgeschlossen hat, wenn der Prozessor nicht am Ende des zweiten Blocks ankommt, bevor die Anzahl von Taktzyklen, die durch den zweiten Watchdog-Prozess durchgeführt werden, die dritte vorbestimmte Schwelle überschreitet.

## Revendications

1. Système (100) permettant de surveiller le changement de flux d'un processus logiciel, le système comprenant :
un processeur (110, 115) configuré pour exécuter une séquence de blocs de code (235, 310, 320) qui comprend le processus logiciel ;
une mémoire locale (240), couplée au processeur, et configurée pour stocker une ou plusieurs valeurs variables (245) associées à l'exécution d'un bloc courant par le processeur ; et
une entité de surveillance (116), couplée au processeur (115) et à la mémoire locale (240), est configurée pour pendant une transition de flux, par le processeur (115), à partir d'un premier bloc (310),
déterminer si le processeur (115) est arrivé à un bloc suivant (320) à partir du premier bloc (310), et
déterminer, en réponse à l'arrivée du processeur (115) au bloc suivant, si le bloc suivant est un deuxième bloc correct, et
pendant le traitement du deuxième bloc par le processeur (115),
déterminer si le processeur (115) termine avec succès le traitement du deuxième bloc (320), et
stocker les une ou plusieurs valeurs variables associées à l'exécution du deuxième bloc dans une mémoire (170) couplée au processeur (115) lorsque le processeur termine avec succès le traitement du deuxième bloc (320) ;
**caractérisé en ce que**
l'entité de surveillance (116) est configurée pour déterminer si le processeur (115) est arrivé au bloc suivant (320) à partir du premier bloc (310) en étant en outre configuré pour
activer un premier processus de surveillance lorsque le processeur (115) termine le traitement du premier bloc (310) ;
surveiller un certain nombre de cycles d'horloge effectués par le premier processus de surveillance ;
déterminer que le processeur est arrivé au bloc suivant (320) à partir du premier bloc (310) lorsque le processeur lance l'exécution du bloc suivant (320) avant que le nombre de cycles d'horloge effectués par le premier processus de surveillance ne dépasse un premier seuil prédéterminé ; et
déterminer que le processeur (115) n'est pas arrivé au bloc suivant (320) à partir du premier bloc (310) lorsque le processeur (115) ne parvient pas à lancer l'exécution du bloc suivant avant que le nombre de cycles d'horloge effectués par le premier processus de surveillance ne dépasse le premier seuil prédéterminé ;
l'entité de surveillance (116) étant en outre configurée pour déterminer si le bloc suivant (320) est le deuxième bloc correct en étant en outre configurée pour
calculer une fonction ayant des entrées comprenant une valeur de signature, une valeur de syndrome, et une adresse associée au bloc suivant, où
générer, par un compilateur, pendant la compilation du processus logiciel, la valeur de signature qui est associée au premier bloc, et
générer, par le compilateur, pendant la compilation du processus logiciel, la valeur de syndrome qui est associée au bloc suivant ; et
déterminer que le bloc suivant est le deuxième bloc correct lorsqu'une valeur de la fonction correspond à une valeur prédéterminée ;
où l'entité de surveillance (116) est en outre configurée pour déterminer si le processeur (115) termine avec succès le traitement du deuxième bloc (320) en étant en outre configurée pour
activer un deuxième processus de surveillance lorsque le processeur lance le traitement du deuxième bloc (320) ;
surveiller un certain nombre de cycles d'horloge effectués par le deuxième processus de surveillance ;
déterminer que le processeur (115) termine avec succès le traitement du deuxième bloc (320) lorsque le processeur (115) arrive à la fin du deuxième bloc avant que le nombre de cycles d'horloge effectués par le deuxième processus de surveillance ne dépasse un deuxième seuil prédéterminé ; et
déterminer que le processeur (115) n'a pas terminé avec succès le traitement du deuxième bloc (320) lorsque le processeur (115) n'arrive pas à la fin du deuxième bloc avant que le nombre de cycles d'horloge effectués par le deuxième processus de surveillance ne dépasse le deuxième seuil prédéterminé ; et
où l'entité de surveillance (116) est configurée pour déterminer si le processeur (115) termine avec succès le traitement du deuxième bloc (320) en étant en outre configurée pour :
générer une valeur de contrôle de redondance cyclique pour le deuxième bloc (320), la valeur de contrôle de redondance cyclique étant une somme de valeurs de contrôle de redondance cyclique intermédiaires, et chaque instruction comprise dans le deuxième bloc (320) correspondant à une valeur de contrôle de redondance cyclique intermédiaire des valeurs de contrôle de redondance cyclique intermédiaires ;
comparer la valeur de contrôle de redondance cyclique à une valeur prédéterminée pour le deuxième bloc (320) ;
et
déterminer que le processeur (115) a terminé avec succès le traitement du deuxième bloc (320) lorsque la valeur de contrôle de redondance cyclique correspond à la valeur prédéterminée pour le deuxième bloc (320).

2. Système (100) selon la revendication 1, dans lequel l'entité de surveillance (116) est en outre configurée pour amener le processeur (115) à tenter de récupérer d'un changement incorrect de flux du processus logiciel lorsque l'une de ladite détermination que le processeur n'est pas arrivé au bloc suivant à partir du premier bloc, de ladite détermination que le processeur n'est pas arrivé à un deuxième bloc correct, ou de ladite détermination que le processeur a terminé avec succès le traitement du deuxième bloc se produit.

3. Système (100) selon la revendication 2, dans lequel l'entité de surveillance (116) est configurée pour amener le processeur (115) à tenter de récupérer en étant en outre configurée pour :
envoyer une interruption au processeur (115), l'interruption amenant le processeur (115) à réexécuter le deuxième bloc (320) ;
démarrer un troisième processus de surveillance ;
surveiller un certain nombre de cycles d'horloge effectués par le troisième processus de surveillance ;
déterminer que le processeur (115) termine avec succès le traitement du deuxième bloc (320) lorsque le processeur (115) arrive à la fin du deuxième bloc (320) avant que le nombre de cycles d'horloge effectués par le troisième processus de surveillance ne dépasse un troisième seuil prédéterminé ; et
déterminer que le processeur (115) n'a pas terminé avec succès le traitement du deuxième bloc (320) lorsque le processeur (115) n'arrive pas à la fin du deuxième bloc avant (320) que le nombre de cycles d'horloge effectués par le deuxième processus de surveillance ne dépasse le troisième seuil prédéterminé.

4. Système selon la revendication 3, dans lequel l'entité de surveillance (116) est en outre configurée pour fournir un signal à une unité de contrôle de défaut externe indiquant que le processus logiciel a échoué,
lorsque le processeur (115) n'a pas terminé avec succès le traitement du deuxième bloc (320) ; et
effacer la mémoire locale (240) des une ou plusieurs valeurs variables associées à l'exécution du deuxième bloc (320).

5. Procédé (400) permettant de surveiller le changement de flux d'un processus logiciel, le procédé comprenant les étapes suivantes :
exécuter, par un processeur (115), une séquence de blocs de code (235, 310, 320) qui constituent le processus logiciel ;
stocker, dans une première mémoire (240), une ou plusieurs valeurs variables associées à ladite exécution d'un bloc courant de la séquence de blocs de code ;
pendant une transition de flux, par le processeur (115), à partir d'un premier bloc (310) des blocs de code,
déterminer (445), par une entité de surveillance (116) couplée au processeur, si le processeur est arrivé à un bloc suivant (320) à partir du premier bloc (310), et
déterminer (450), par l'entité de surveillance (116), en réponse à l'arrivée du processeur au bloc suivant, si le bloc suivant est un deuxième bloc correct ; et
pendant le traitement du deuxième bloc par le processeur, déterminer, par l'entité de surveillance, si le processeur termine avec succès le traitement du deuxième bloc, et
stocker les une ou plusieurs valeurs variables associées à l'exécution du deuxième bloc dans une deuxième mémoire couplée au processeur en réponse à ladite détermination que le processeur a terminé avec succès le traitement du deuxième bloc ;
**caractérisé en ce que**
ladite détermination du fait que le processeur est arrivé au bloc suivant à partir du premier bloc comprend les étapes suivantes :
activer (430), par l'entité de surveillance, un premier processus de surveillance lorsque le processeur achève le traitement du premier bloc ;
surveiller (435), par l'entité de surveillance, un certain nombre de cycles d'horloge effectués par le premier processus de surveillance ;
déterminer (440), par l'entité de surveillance, que le processeur est arrivé au bloc suivant à partir du premier bloc lorsque le processeur lance l'exécution du bloc suivant avant que le nombre de cycles d'horloge effectués par le premier processus de surveillance ne dépasse un premier seuil prédéterminé ; et
déterminer (490), par l'entité de surveillance, que le processeur n'est pas parvenu au bloc suivant à partir du premier bloc lorsque le processeur n'a pas lancé l'exécution du bloc suivant avant que le nombre de cycles d'horloge effectués par le premier processus de surveillance ne dépasse le premier seuil prédéterminé ;
où ladite détermination du fait que le bloc suivant est le deuxième bloc correct comprend les étapes suivantes : calculer (445), par l'entité de surveillance, une fonction ayant des entrées comprenant une valeur de signature, une valeur de syndrome et une adresse associée au bloc suivant, où un compilateur, pendant la compilation du processus logiciel, génère la valeur de signature qui est associée au premier bloc, et
générer, par le compilateur, pendant la compilation du processus logiciel, la valeur de syndrome qui est associée au bloc suivant ; et
déterminer (450), par l'entité de surveillance, que le bloc suivant est le deuxième bloc correct lorsqu'une valeur de la fonction correspond à une valeur prédéterminée ;
où ladite détermination, par l'entité de surveillance, du fait que le processeur termine ou non avec succès le traitement du deuxième bloc comprend les étapes suivantes :
activer un deuxième processus de surveillance (460) lorsque le processeur lance le traitement du deuxième bloc ;
surveiller un certain nombre de cycles d'horloge effectués par le deuxième processus de surveillance ;
déterminer que le processeur termine avec succès le traitement du deuxième bloc lorsque le processeur arrive à la fin du deuxième bloc avant que le nombre de cycles d'horloge effectués par le deuxième processus de surveillance ne dépasse un deuxième seuil prédéterminé ;
et
déterminer que le processeur n'a pas terminé avec succès le traitement du deuxième bloc lorsque le processeur n'arrive pas à la fin du deuxième bloc avant que le nombre de cycles d'horloge effectués par le deuxième processus de surveillance ne dépasse le deuxième seuil prédéterminé ; et où la détermination, par l'entité de surveillance, du fait que le processeur termine ou non avec succès le traitement du deuxième bloc comprend en outre les étapes suivantes :
générer (470) une valeur de contrôle de redondance cyclique (CRC) pour le deuxième bloc, la valeur CRC étant une somme de valeurs CRC intermédiaires, et
chaque instruction comprise dans le deuxième bloc correspondant à une valeur CRC intermédiaire des valeurs CRC intermédiaires ;
comparer la valeur CRC à une valeur prédéterminée pour le deuxième bloc ; et
déterminer que le processeur a terminé avec succès le traitement du deuxième bloc lorsque la valeur CRC correspond à la valeur prédéterminée pour le deuxième bloc.

6. Procédé selon la revendication 5 comprenant en outre l'étape suivante :
amener (490), par l'entité de surveillance, le processeur à tenter de récupérer d'un changement incorrect de flux du processus logiciel lorsque l'une de ladite détermination que le processeur n'est pas arrivé au bloc suivant à partir du premier bloc, de ladite détermination que le processeur n'est pas arrivé à un deuxième bloc correct, ou de la détermination que le processeur n'a pas réussi à traiter le deuxième bloc se produit.

7. Procédé selon la revendication 6, dans lequel amener, par l'entité de surveillance, le processeur à tenter de récupérer comprend en outre les étapes suivantes :
envoyer une interruption (490) au processeur (115), où l'interruption amène le processeur à réexécuter le deuxième bloc ;
commencer un troisième processus de surveillance ;
surveiller un certain nombre de cycles d'horloge effectués par le troisième processus de surveillance ;
déterminer que le processeur termine avec succès le traitement du deuxième bloc lorsque le processeur arrive à la fin du deuxième bloc avant que le nombre de cycles d'horloge effectués par le troisième processus de surveillance ne dépasse un troisième seuil prédéterminé ; et
déterminer que le processeur n'a pas terminé avec succès le traitement du deuxième bloc lorsque le processeur n'arrive pas à la fin du deuxième bloc avant que le nombre de cycles d'horloge effectués par le deuxième processus de surveillance ne dépasse le troisième seuil prédéterminé.
